Europäisches Patentamt

European Patent Office

Office européen des brevets

⑨

Publication number: **0 272 796**

**A1**

## (12) EUROPEAN PATENT APPLICATION

(21) Application number: **87310166.1**

(22) Date of filing: **18.11.87**

(30) Priority: **22.11.86 GB 8627977**

(43) Date of publication of application:
**29.06.88 Bulletin 88/26**

(84) Designated Contracting States:
**DE FR GB**

(51) Int. Cl.⁴ **B60R 1/06** , B29C 49/00

(71) Applicant: **Britax Limited**
**Kingsham Road**
**Chichester, West Sussex P019 2UG(GB)**

(72) Inventor: **Cunningham, Douglas James**
**42 Viking Way Horndean**
**Portsmouth Hampshire(GB)**

(74) Representative: **Hollinghurst, Antony**
**Britax Limited Patent Department Kingsham**
**Road**
**Chichester West Sussex PO19 2UG(GB)**

(54) Hydraulic remote control system.

(57) A bulb (36) for a hydraulic unit is formed by placing two layers (28, 30) of thermoplastic sheet material over a cavity (12) in a tool (20) base (10), locating an annular clamping member (22) at a distance from the surface of the tool (20) base (10) surrounding the cavity (12) such that the thermoplastic material is a sliding fit therebetween, pressing on to the thermoplastic material bridging the cavity (12) the convex end (18) of a mandrel (16) shaped to substantially conform to the concave shape of the cavity (12), applying an annular welding tool (20) to the thermoplastic material surrounding the cavity (12) so as to weld the two layers (28, 30) together round all of the cavity (12) except for a hydraulic fluid inlet opening, and withdrawing the mandrel (16), clamping member (22) and welding tool (20) from the tool (20) base (10). Such a hydraulic unit forms part of a hydraulic remote control system for adjusting the orientation of a controlled member in which the bulb (36) is located between a first contact member (38) of concave hemispherical shape and a second contact member (40) of convex hemispherical shape dimensioned to nest within the first contact member (38).

FIG.1.

FIG.4.

## HYDRAULIC REMOTE CONTROL SYSTEM

This invention relates to a hydraulic remote control system for adjusting the orientation of a control member and has particular application to the adjustment of the orientation of a rear view mirror for a vehicle.

Patent specification EP-A-0167315 discloses a sealed unit for a hydraulic remote control system of this type, consisting of two layers of flexible material, for example opposite the walls of a flattened tube, which are welded together so as to form a relatively large volume bulb at each end interconnected by a narrow tube. The unit contains sufficient hydraulic fluid to ensure that, when one bulb is substantially flattened, the other bulb is substantially completely distended by the liquid.

In use, one of the bulbs is engaged by a pusher formation on an actuator while the other bulb is engaged by a follower so that movement of the pusher of the actuator so as to compress the corresponding bulb causes the other bulb to be distended and thereby displace the follower. However, a sealed unit of this type suffers from the disadvantage that, since the two layers of flexible material were flat when welded together, distending either bulb stretches the flexible material of which it is formed. Consequently the pressure in the hydraulic liquid is higher than the intermediate condition when the two bulbs are substantially equally distended. The result is that the system is biased into this intermediate position. It is an object of the invention to provide a sealed hydraulic unit of this type which is not subject to this disadvantage.

According to one aspect of the invention, a method of forming a bulb for a hydraulic unit of the foregoing type comprises the steps of placing two layers of thermoplastic sheet material over a cavity in a tool base, locating an annular clamping member at a distance from the surface of the tool base surrounding the cavity such that the thermoplastic material is a sliding fit therebetween, pressing on to the thermoplastic material bridging the cavity the convex end of a mandrel shaped to substantially conform to the concave shape of the cavity, applying an annular welding tool to the thermoplastic material surrounding the cavity so as to weld the two layers together round all of the cavity except for a hydraulic fluid inlet opening, and withdrawing the mandrel, clamping member and welding tool from the tool base.

Preferably the cavity and the convex end of the mandrel are hemispherical.

In order to facilitate the expulsion of trapped air between the sheets of thermoplastic material, the tool base is preferably formed of resiliently deformable material and the curvature of the cavity therein made slightly less than that of the convex end of the mandrel. Consequently the mandrel first makes contact with the wall of the cavity at the bottom thereof and, as the mandrel is moved further downwards, the wall of the cavity deforms and the zone of contact spreads radially outwardly, thereby expelling any trapped air.

The clamping member may also serve as the welding tool. However, with this arrangement, it is necessary to allow sufficient time for the welding tool to cool before the cycle of operations can be repeated. Faster operation can be achieved if the clamping member is separate from the welding tool, in which case the weld tool is preferably arranged to engage with the thermoplastic sheet material closely adjacent to the edge of the cavity and the clamping member to engage therewith outwardly of the welding tool.

The mandrel may be cold. When inserted into the cavity, it elastically deforms the thermoplastic material, also drawing additional sheet material under the clamping member. After the welding operation has been completed, such additional material remains inside the weld so that the bulb does not lie flat when empty and less energy is required to fully distend it.

Alternatively the mandrel may itself be heated sufficiently to plastically deform the thermoplastic material. With this arrangement, the bulb takes up a hemispherical shape when empty and a spherical shape when fully distended.

According to another aspect of the invention, a hydraulic remote control system for adjusting the orientation of a control member comprising a tube interconnecting two bulbs of flexible material and containing sufficient hydraulic fluid to ensure that, when one bulb is substantially flattened, the other bulb is substantially completely distended by the liquid, each bulb being located between a respective pair of contact members, the contact members of each pair being moveable so as to vary the relative distance therebetween so that movement of one pair of contact members in a direction to compress the corresponding bulb causes the other bulb to be distended and thereby displace the other pair of contact members apart from each other, at least one of the pairs comprising a first contact member of concave hemispherical shape and a second contact member of convex hemispherical shape dimensioned to nest within the first contact member.

Preferably, the radius of curvature of said convex contact member is less than the radius of curvature of said concave contact member by an amount equal to twice the thickness of the wall of the bulb located therebetween.

An embodiment of the invention will now be described. by way of example, with reference to the accompanying drawings in which;

Figure 1 is a cross-sectional view of apparatus for carrying out the method in accordance with the invention;

Figure 2 is a plan view of a bulb produced on the apparatus illustrated in Figure 1;

Figure 3 is a schematic cross-sectional view of the bulb shown in Figure 2 fitted into a actuator with the bulb in its fully distended condition;

Figure 4 is a cross-sectional view similar to Figure 3 but with the bulb partly distended; and

Figure 5 is a cross-sectional view similar to Figure 3 but with the bulb fully collapsed.

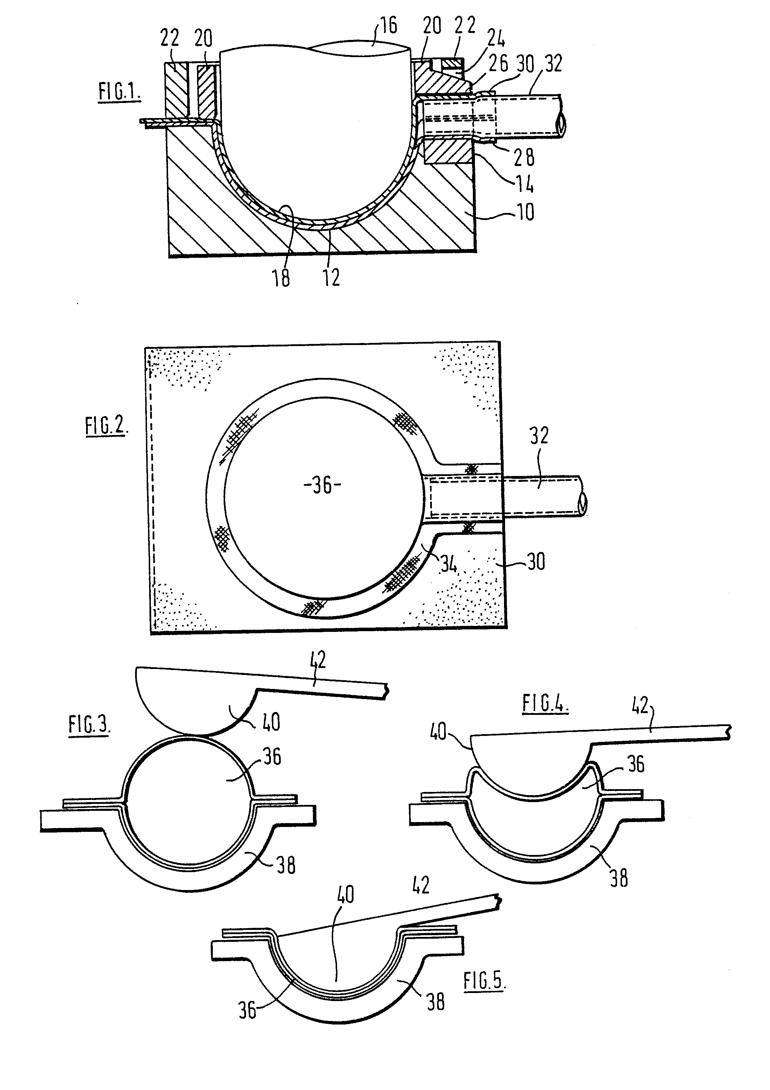

Referring first to Figure 1, the apparatus for producing bulbs comprises a tool base 10 formed of elastomeric material and having a hemispherical cavity 12 therein. A half-cylindrical channel lined with a thermally conductive insert 14, leads from the edge of the cavity 12 to the adjacent edge of the tool base 10. A heatable mandrel 16 having a hemispherical end 18 is mounted for vertical reciprocating movement into and out of the cavity 12. The radius of the hemispherical end 18 is slightly less than that of the cavity 12 so that, as the mandrel 16 is moved downwardly, its hemispherical end 18 first touches the centre of the cavity 12 and then deforms the elastomeric material of the tool base 10 so that the zone of contact spreads radially outwardly.

Surrounding the mandrel 16 is an annular heatable welding tool 20 which, in turn, is surrounded by an annular clamping ring 22. The welding tool 20 and the clamping ring 22 are also mounted for vertical reciprocal movement parallel to the axis of the mandrel 18. The clamping ring 22 has a small cut-away portion 24 which bridges radial extensions 26 of the welding tool 20 in order to form an inlet, as will be explained hereinafter.

The following sequence of operations is performed in order to form a bulb for a hydraulic unit in accordance with the invention. Initially the mandrel 18, the welding tool 20 and the clamping ring 22 are all in their uppermost positions in which they are well above the top surface of the tool base 10. Two sheets of thermoplastic material 28 and 30 are laid on the tool base 10 so as to cover the cavity 12 and an inlet tube 32 is inserted therebetween and located in the channel in the insert 14. The clamping ring 22 is then lowered to a position in which the two thermoplastic sheets 28 and 30 can slide between the clamping ring 22 and the tool base 10 and any air trapped between the two sheets 28 and 30 can escape but in which crinkling of the sheets 28 and 30 under the clamping ring 22 is substantially prevented.

Next. the mandrel 18, which is heated to a temperature above the softening temperature but below the melting temperature of the thermoplastic sheet material, is moved downwardly so as to press the sheet 28 and 30 into the cavity 12. Since contact is first made at the centre of the cavity 12 and then the zone of contact spreads radially outwardly, as described above, any trapped air is squeezed out from between the sheets 28 and 30 as they are formed into a hemispherical shape, additional sheet material being free to flow under the clamping ring 22 as the drawing operation proceeds.

Then, with the clamping ring 22 still in place, the welding tool 20 is moved downwardly so as to weld the two sheets 28 and 30 together along a weld line 34, as shown in Figure 2, at the same time welding them to the tube 32. The mandrel 16, the welding tool 20 and the clamping ring ring 22 are then raised to their original positions and the completed bulb 36 removed from the tool base 10.

Turning to Figures 3, 4 and 5, the bulb 36 is located in a hemispherical recess 38 in an actuator housing. A hemispherical contact member 40 is mounted on a lever 42 so as to be movable into and out of the recess 38. As can be seen from the drawings, the upper wall of the bulb 36 behaves as a rolling diaphragm and the sheet material is not streched as the contatc member 40 moves between the positions shown in Figures 3 and 5.

**Claims**

1. A method of forming a bulb (36) for a hydraulic unit, comprising the steps of placing two layers (28, 30) of thermoplastic sheet material over a cavity (12) in a tool (20) base (10), locating an annular clamping member (22) at a distance from the surface of the tool (20) base (10) surrounding the cavity (12) such that the thermoplastic material is a sliding fit therebetween, pressing on to the thermoplastic material bridging the cavity (12) the convex end (18) of a mandrel (16) shaped to substantially conform to the concave shape of the cavity (12), applying an annular welding tool (20) to the thermoplastic material surrounding the cavity (12) so as to weld the two layers (28, 30) together round all of the cavity (12) except for a hydraulic fluid inlet opening, and withdrawing the mandrel (16), clamping member (22) and welding tool (20) from the tool (20) base (10).

2. A method according to claim 1, wherein the cavity (12) and the convex end (18) of the mandrel (16) are hemispherical.

3. A method according to claim 1 or 2, wherein the tool (20) base (10) is formed of resiliently deformable material and the curvature of the cavity (12) therein is less than that of the convex end (18) of the mandrel (16).

4. A method according to claim 1, 2 or 3, wherein the clamping member also serves as the welding tool.

5. A method according to claim 1, 2 or 3, wherein the clamping member (22) is separate from the welding tool (20), the welding tool (20) being arranged to engage with the thermoplastic sheet material closely adjacent to the edge of the cavity (12) and the clamping member (22) to engage therewith outwardly of the welding tool (20).

6. A hydraulic remote control system for adjusting the orientation of a controlled member comprising a tube interconnecting two bulbs (36) of flexible material and containing sufficient hydraulic fluid to ensure that, when one bulb (36) is substantially flattened, the other bulb (36) is substantially completely distended by the liquid, each bulb (36) being located between a respective pair of contact members (38, 40), the contact members (38, 40) of each pair being moveable so as to vary the relative distance therebetween so that movement of one pair of contact members (38, 40) in a direction to compress the corresponding bulb (36) causes the other bulb (36) to be distended and thereby displace the other pair of contact members (38, 40) apart from each other, at least one of the pairs comprising a first contact member (38) of concave hemispherical shape and a second contact (40) member of convex hemispherical shape dimensioned to nest within the first contact member (38).

7. A hydraulic system according to claim 6, wherein the radius of curvature of said convex contact member (40) is less than the radius of curvature of said concave contact member (38) by an amount equal to twice the thickness of the wall of the bulb (36) located therebetween.

FIG.1.

22  20                    16        20  22        24
                                             26  30  32

                                                      28
                                                      14
                                                      10

18    12

FIG.2.

-36-

32

34        30

FIG.3.

42

40

36

38

FIG.4.

42

40

36

38

40    42

36        38

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 567 337  (ALUMINIUMWERKE AG)<br>* Page 1, line 59 - page 2, line 36; figures 1,2,12,13 * | 1 | B 60 R    1/06<br>B 29 C   49/00 |
| A | --- | 2,5 | |
| A | US-A-4 130 619  (HELD)<br>* Column 1, line 65 - column 2, line 23; figures 1-6 *<br>--- | 1-5,7 | |
| D,A | EP-A-0 167 315  (BRITAX LTD)<br>* Whole document *<br>--- | 1,6 | |
| A | EP-A-0 152 219  (B.S.G. OVERSEAS LTD)<br>* Page 1, line 17 - page 4, line 2; figures 1-4,16-19 *<br>--- | 1 | |
| A | US-A-3 141 196  (LANGECKER)<br>----- | | |

TECHNICAL FIELDS SEARCHED (Int. Cl.4)

B 60 R
F 15 B
B 29 C

The present search report has been drawn up for all claims

| Place of search | Date of completion of the search | Examiner |
|---|---|---|
| THE HAGUE | 23-02-1988 | MAUSSER,T. |